**Europäisches Patentamt**

(19) **European Patent Office**

**Office européen des brevets**

(11) Veröffentlichungsnummer: **0 070 528**
**B1**

(12) **EUROPÄISCHE PATENTSCHRIFT**

(45) Veröffentlichungstag der Patentschrift:
**29.05.85**

(51) Int. Cl.⁴: **B 01 J 13/02**, B 41 M 5/00

(21) Anmeldenummer: **82106380.7**

(22) Anmeldetag: **15.07.82**

(54) Mikrokapseln, Verfahren zur Herstellung von Mikrokapseln und deren Verwendung in druckempfindlichen Papieren.

(30) Priorität: **17.07.81 JP 110918/81**

(43) Veröffentlichungstag der Anmeldung:
**26.01.83 Patentblatt 83/4**

(45) Bekanntmachung des Hinweises auf die Patenterteilung:
**29.05.85 Patentblatt 85/22**

(84) Benannte Vertragsstaaten:
**BE CH DE FR GB LI**

(56) Entgegenhaltungen:
**DE - A - 2 926 860**
**DE - A - 3 008 658**
**FR - A - 2 416 727**
**FR - A - 2 441 417**
**GB - A - 2 062 570**

(73) Patentinhaber: **JUJO PAPER CO., LTD., No. 4-1, Oji 1-chome, Kita-ku Tokyo (JP)**

(72) Erfinder: **Egawa, Setsuya Oiso Branch Factory, Jujo Paper Co., Ltd. No. 2333, Oiso, Oiso-machi Naka-gun Kanagawa (JP)**
Erfinder: **Sakamoto, Masahiro Oiso Branch Factory, Jujo Paper Co., Ltd. No. 2333, Oiso, Oiso-machi Naka-gun Kanagawa (JP)**

(74) Vertreter: **Kinzebach, Werner, Dr. et al, Patentanwälte Reitstötter, Kinzebach und Partner Postfach 780, D-8000 München 43 (DE)**

## Beschreibung

Die Erfindung betrifft Mikrokapseln, deren Mikrokapselwandmaterial ein Aminoharz, insbesondere ein Melamin-Aldehydharz oder Harnstoff-Aldehydharz enthält, ein Verfahren zur Herstellung derartiger Mikrokapseln und deren Verwendung in druckempfindlichen Papieren.

Mikrokapseln sind bereits zur Abwandlung oder Einstellung verschiedener Eigenschaften von Arzneimitteln, Agrochemikalien, Parfümen, Farbstoffen usw. verwendet worden. Als Einkapselungsverfahren sind verschiedene Verfahren, z. B. mechanische, physikalische, physikalisch-chemische und chemische Verfahren und kombinierte Verfahren dieser Art bekannt. Die Eigenschaften der auf obige Weise hergestellten Mikrokapseln sind vielfältig; sie können entsprechend den einzukapselnden Kernsubstanzen und den Anwendungszwecken gewählt werden.

Als physikalisch-chemisches Herstellungsverfahren ist im allgemeinen das Komplex-Koazervierungsverfahren bekannt, bei dem üblicherweise Gelatine verwendet wird.

Dieses Verfahren, gemäß dem viele hydrophobe Materialien eingekapselt werden können, wird nach der Veröffentlichung des US-Patents 2 800 457 im Jahre 1957 jetzt üblicherweise angewendet.

Das Komplex-Koazervierungsverfahren hat jedoch die Nachteile, daß wegen der Verwendung eines Naturprodukts die erhaltenen Mikrokapseln verschiedene Qualität aufweisen, eine zu geringe Wasserbeständigkeit haben, die Durchlässigkeit der Kapselwand etwas zu groß ist, und daß der Kapselschlamm nicht in hoher Konzentration erhalten werden kann.

Als chemische Verfahren, bei denen das Harz für die Mikrokapselwandbildung aus verschiedenen Monomeren oder Oligomeren hergestellt wird, gibt es die zwei folgenden Verfahren:

(1) Grenzflächen-Polymerisationsverfahren, bei dem die Reaktion sowohl aus einer Kernsubstanz als auch aus einer kontinuierlichen Phase abläuft.

(2) »in-situ«-Polymerisationsverfahren, bei dem die Reaktion entweder aus einer Kernsubstanz oder aus einer kontinuierlichen Phase abläuft.

Die chemischen Verfahren haben die Vorteile, daß die Auswahlmöglichkeiten für die Monomeren oder Oligomere sehr groß sind und daß hydrophobe bis hydrophile Substanzen eingekapselt werden können, aber sie haben die Nachteile, daß wegen der starken Reaktivität des Ausgangsmaterials leicht eine Reaktion mit der Kernsubstanz stattfindet, das Ausgangsmaterial manchmal stark giftig ist, die Bildung dicker Mikrokapselwände schwierig ist, usw. Deshalb werden diese chemischen Verfahren nur beschränkt angewendet.

Die Verwendung von Melamin-Formaldehydpolykondensat oder Harnstoff-Formaldehydpolykondensat als kapselwandbildendes Mittel ist in den japanischen Patentpublikationen Nrn. 12 380/1962, 3 495/1969, 23 165/1972 usw. beschrieben, sie hat aber den Nachteil, daß eine wirksame und stabile Ablagerung dieses Polykondensates auf der hydrophoben Substanz schwierig ist oder daß die Emulgierung und Dispergierung nicht effektiv durchgeführt werden können.

Zur Überwindung dieses Nachteils ist in der japanischen Patentpublikation Nr. 16 949/1979 vorgeschlagen worden, als anionischen hochmolekularen Elektrolyt Polyäthylenmaleinsäureanhydrid, Polyacrylsäure, Polymethylvinyläthermaleinsäureanhydrid, usw. zu verwenden. Dies führt zu verbesserten Emulgierungs- und Dispergierungseigenschaften und zu wirksamerer Ablagerung des Polykondensats auf der Kernsubstanz, hat jedoch die Nachteile, daß Polyäthylenmaleinsäureanhydrid und Polymethylvinyläthermaleinsäureanhydrid, die besonders effektiv sind, höhere Temperatur und längere Zeit bei der Auflösung benötigen und daß der dabei erhaltene Kapselschlamm eine hohe Viskosität hat.

Weiter ist in der japanischen Offenlegungsschrift Nr. 47 139/1980 beschrieben, daß bei Verwendung eines Gemisches aus Styrol-Maleinsäureanhydridcopolymerisat und Vinylacetat-Maleinsäureanhydridcopolymerisat die Emulgierungs- und Dispergierungsfähigkeit verbessert wird, und ein stabiler Kapselschlamm mit einer niedrigen Viskosität erhalten wird. Dabei scheidet sich Styrol-Maleinsäureanhydridcopolymerisat bei einem pH-Wert tiefer als 4 ab, so daß folgende Methoden nicht angewendet werden können:

1) Verwendung von Harnstoff-Formaldehydharz, das als kapselwandbildendes Mittel bei einem tieferen pH-Wert reagiert.

2) Zugabe von Harnstoff, Äthylenharnstoff, usw. zur Entfernung des restlichen Formaldehyds nach der Einkapselung.

Weiterhin ist in der japanischen Offenlegungsschrift Nr. 51 238/1981 beschrieben, daß bei Verwendung von Polymeren der Vinylbenzolsulfonsäurereihe als anionisches Polymeres zur Herstellung von Mikrokapseln, bei denen Melamin-Formaldehydpolykondensat als Mikrokapselwand verwendet wird, man einen Kapselschlamm mit einer hohen Konzentration und einer niedrigen Viskosität, bei dem der restliche Formaldehyd bei einem tieferen pH-Wert behandelt wird, erhalten kann. Die Anwendung dieses Verfahrens auf die Herstellung von Mikrokapseln, bei denen Harnstoff-Formaldehydharz als Mikrokapselwand verwendet wird, hat jedoch die Nachteile, daß die Bildung einer undurchlässigen Mikrokapselwand schwierig ist, das System durch eine geringe Veränderung der Herstellungsbedingungen ganz koaguliert wird, große Schaumbildung beim Auflösen des Polymeren manchmal auftritt, und daß die Herstellung stabiler Mikrokapseln unmöglich ist.

2

Der Erfindung liegt daher die Aufgabe zugrunde, Mikrokapseln und ein Verfahren zur Herstellung von Mikrokapseln zu schaffen, wobei als mikrokapselwandbildendes Material ein Aminoharz, d. h. ein Melamin-Aldehydpolykondensat und Harnstoff-Aldehydpolykondensat, verwendet wird, die Emulgierungsgeschwindigkeit der hydrophoben Kernsubstanz groß ist, die Verteilung der emulgierten Teilchen und die Stabilität gegenüber den Einkapselungsbedingungen, z. B. Einkapselungstemperatur, -zeit, -pH-Wert, -konzentration usw., besser ist und die Einstellung von zweckmäßigen emulgierten Teilchen leichter ist.

Dazu gehört auch, daß die Kapseln und die Herstellung relativ unempfindlich gegenüber Änderungen der Einkapselungsbedingungen, beispielsweise Einkapselungsausgangsmaterialien, -temperatur, -zeit, -pH-Wert, -konzentration usw. sein sollen, und die Mikrokapselwandeigenschaften — beispielsweise Kapselundurchlässigkeit, -weichheit- und -steifigkeit — für die gewünschten Anwendungszwecke, insbesondere für die Anwendung in druckempfindlichen Papieren, geeignet sind.

Schließlich soll das erfindungsgemäße Verfahren auch zu einem Kapselschlamm hoher Konzentration und niedrigerer Viskosität führen, der zeitlich sehr stabil ist und verbesserte Streichfähigkeit besitzt.

Diese Aufgabe wird erfindungsgemäß dadurch gelöst, daß man bei einem Mikroverkapselungsverfahren ein Melamin-Aldehydpolykondensat oder Harnstoff-Aldehydpolykondensat als Mikrokapselwand verwendet und ein System benutzt, in dem eine hydrophobe Kernsubstanz in einer eine anionische kolloidale Substanz enthaltenden, sauren wäßrigen Lösung dispergiert oder emulgiert wird, als anionisches kolloidales Material ein anionisches wasserlösliches Copolymerisat verwendet, das aus mindestens drei Monomeren besteht, nämlich Acrylsäure, Hydroxyalkylacrylat oder Hydroxyalkylmethacrylat, und Styrolsulfonsäure. Noch bessere Ergebnisse erhält man, wenn das anionische wasserlösliche Copolymerisat zusätzlich mindestens ein Material aus der Gruppe Alkylacrylat, Methacrylsäure, Alkylmethacrylat, Acrylamid, Methacrylamid, Bernsteinsäureester des Hydroxyalkylacrylats, Bernsteinsäureester des Hydroxyalkylmethacrylats, Vinylacetat und Acrylnitril als vierte und weitere Komponente, neben den drei obigen Komponenten, enthält.

10—95 Gew.-% Acrylsäure, 2—50 Gew.-% Styrolsulfonsäure, 2—30 Gew.-% Hydroxyalkylacrylat oder Hydroxyalkylmethacrylat, und 0—20 Gew.-% der obigen vierten Komponente sind geeignet für diese Erfindung. 50—80 Gew.-% Acrylsäure, 5—30 Gew.-% Styrolsulfonsäure, 5—20 Gew.-% Hydroxyalkylacrylat oder Hydroxyalkylmethacrylat, und 1—15 Gew.-% der obigen vierten Komponente sind am besten geeignet.

Das erfindungsgemäße wasserlösliche Copolymerisat kann salzfrei oder in einer teilweise in das Salz überführten Form verwendet werden, wobei als Salz Natrium-, Kalium- und Lithiumsalz bevorzugt sind.

Die Einzelheiten über die Wirkung der einzelnen Monomeren sind unklar, aber nach der Copolymerisation führt die Acrylsäure zur Stabilisierung der emulgierten Teilchen (nachstehend als Stabilität bei der Emulgierung bezeichnet), zur Beschleunigung der Reaktion der Mikrokapselwandbildung und zur Bildung eines Kapselschlamms mit weniger Koagulation. Diese Einzeleffekte können jedoch noch nicht ganz befriedigen.

Dabei sind große Teilchen zerstreut vorhanden, der resultierende Kapselschlamm hat eine ziemlich hohe Viskosität, und die Mikrokapselwand ist undurchlässig, aber ziemlich weich.

Styrolsulfonsäure beschleunigt andererseits die Emulgierungsgeschwindigkeit und die mikrokapselwandbildende Reaktion und führt zu einer ziemlich harten Mikrokapselwand, hat jedoch den Nachteil, daß wegen der Neigung der Koagulierung der Mikrokapseln die Stabilisierung des Systems während der Reaktion schwierig ist. Weiter hat Styrolsulfonsäure den Nachteil, daß sie teuer ist und daß die Kapselwanddurchlässigkeit zu groß ist. Daher ist die Verwendung von Styrolsulfonsäure in großer Menge unvorteilhaft.

Hydroxyalkylmethacrylat oder Hydroxyalkylacrylat beschleunigt die mikrokapselwandbildende Reaktion, führt zu einem Kapselschlamm mit weniger Koagulation und mit einer ziemlich niedrigen Viskosität, die Emulgierbarkeit dürfte etwas besser sein. Alkylgruppen mit 1 bis 10 Kohlenstoffatomen, vorzugsweise 1 bis 4 Kohlenstoffatomen, sind geeignet. Hydroxyalkylmethacrylate und Hydroxyalkylacrylate, die erfindungsgemäß geeignet sind, umfassen: Hydroxymethylacrylat, Hydroxyäthylacrylat, Hydroxybutylacrylat, Hydroxyisopropylacrylat, Hydroxymethylmethacrylat, Hydroxyäthylmethacrylat, Hydroxybutylmethacrylat und Hydroxyisopropylmethacrylat.

Wie schon erwähnt, vermutet man, daß die vorteilhaften Wirkungen des erfindungsgemäßen anionischen wasserlöslichen Copolymerisats darauf beruhen, daß die Einzeleffekte der Carboxylgruppe ($-COOH$) der Acrylsäure, der Sulfongruppe ($-SO_3X$, wobei X ein Wasserstoffatom, Alkalimetall oder Ammoniak bedeutet) der Styrolsulfonsäure und der Hydroxygruppe ($-OH$) des Hydroxyalkylacrylats oder Hydroxymethacrylats, und der hydrophoben Gruppen der Styrylgruppe, Alkylgruppe, usw. sehr gut ausgewogen und ausgeglichen sind.

Es kann vorteilhaft sein, den Bernsteinsäureester des Hydroxyalkylmethacrylats als vierte Komponente für die Beschleunigung der mikrokapselbildenden Reaktion zu verwenden, und Alkylacrylat, Alkylmethacrylat, Acrylamid, Methacrylamid, Acrylnitril, usw. für die Einstellung der Teilchengrößenverteilung, die Einstellung der Viskosität des Kapselschlamms und die Kontrolle der Kapselwandundurchlässigkeit, -weichheit und -steifigkeit zu verwenden.

Es ist vorteilhaft, das erfindungsgemäß verwendete anionische wasserlösliche Copolymerisat in Form einer wäßrigen Lösung, die 20 Gew.-% der nicht-flüchtigen Komponente enthält und einen pH-Wert von 1—4 besitzt, zu verwenden. Bei der Lösung, die 20 Gew.-% der nichtflüchtigen Komponente enthält, beträgt die Viskosität bei 25°C gemessen mit einem Brookfieldviskosimeter, im allgemeinen 100—500 000 cps, vorzugsweise jedoch 500—20 000 cps. Bei einer Viskosität unter 500 cps sind die Stabilisierung der emulgierten Teilchen bei der kapselwandbildenden Reaktion und die Emulgierbarkeit ungenügend. Bei einer Viskosität von über 20 000 cps sind die Stabilisierung und Emulgierbarkeit sehr gut, es kann dann jedoch Probleme bei der praktischen Produktion geben, und der Kapselschlamm kann eine unerwünscht hohe Viskosität haben.

Das erfindungsgemäße anionische wasserlösliche Copolymerisat kann als solches oder gegebenenfalls nach Verdünnung verwendet werden und ist, auch wenn verdünnt wird, stabil, d. h., es gibt keine Trübung, keine Ausfällung und keine Koagulation in der wäßrigen Lösung im weiteren pH-Bereich von 1—14, was die Anwendung verschiedener kapselwandbildender Reaktionen und verschiedener Verfahren zum Entfernen von freiem Formaldehyd als Nachbehandlungsprozeß ermöglicht.

Die Entfernung von freiem Formaldehyd mit Harnstoff oder Äthylenharnstoff kann z. B. bei einem pH-Wert von 2—3 durchgeführt werden.

Das erfindungsgemäße kapselwandbildende Material ist ein Harnstoff-Aldehydpolykondensat oder Melamin-Aldehydpolykondensat beispielsweise Methylharnstoff- oder Dimethylolharnstoff- oder Methyldimethylolharnstoff-Aldehydpolykondensat, Melamin-Aldehydpolykondensat, Melamin-Aldehydvorkondensat, methyliertes Melamin-Aldehydvorkondensat oder butyliertes Melamin-Aldehydvorkondensat, phenolmodifiziertes Melamin-Aldehydvorkondensat oder harnstoffmodifiziertes Melamin-Aldehydvorkondensat. Jedes kapselwandbildende Material bildet überlegene Mikrokapseln, weil das erfindungsgemäße anionische wasserlösliche Copolymerisat die kapselwandbildende Reaktion in einem weiteren pH-Bereich ermöglicht.

Die Aldehyde, die erfindungsgemäß verwendet werden können, sind Formaldehyd, Acetaldehyd, Butyraldehyd, Glyoxal, Glutardialdehyd, Acrolein, Benzaldehyd usw. Die Kombination von Harnstoff und Formaldehyd ist industriell bevorzugt unter Berücksichtigung der Reaktionsgeschwindigkeit, -temperatur, -zeit, -kosten, usw.

Die Menge des erfindungsgemäßen anionischen wasserlöslichen Copolymerisats in einem Einkapselungssystem liegt bei 1—15 Gew.-Teile, vorzugsweise 3—10 Gew.-Teile, pro 100 Gew.-Teile des kapselwandbildenden Materials, ist aber je nach der Art des anionischen wasserlöslichen Copolymerisates, dem kapselwandbildenden Ausgangsmaterial, der Art der Kernsubstanz, den kapselbildenden Bedingungen (Temperatur, pH-Wert, Konzentration) usw. verschieden.

Das erfindungsgemäße anionische wasserlösliche Copolymerisat kann zusammen mit anderen wasserlöslichen Polymeren, z. B. Äthylen-Maleinsäureanhydridcopolymerisat, Methylvinyläther-Maleinsäureanhydridcopolymerisat, Polyacrylsäure, Propylen-Maleinsäureanhydridcopolymerisat, Isobutylen-Maleinsäureanhydridcopolymerisat, Butadien-Maleinsäureanhydridcopolymerisat, Vinylacetat-Maleinsäureanhydridcopolymerisat, modifiziertem Polyvinylalkohol, Zellulosederivaten, Gummiarabikum usw. verwendet werden.

Die Anwendung von Mikrokapseln erfolgt heute auf dem Gebiet von Aufzeichnungsmaterialien, medizinischen Mitteln, Parfümen, Agrochemikalien, chemischen Produkten, Nahrungsmitteln, Lösungsmitteln, Katalysatoren, Enzymen usw. Die verwendeten Kernsubstanzen sind z. B. Farbstoffe, Farbstoffvorläufer, Flüssigkristalle, Pigmente wie Carbon Black, Aspirin, krebsverhindernde Mittel, Menthol, Wein, Benzin, Dibutylphthalat, Enzymlipase, usw., und sie werden als solche oder nach der Dispergierung und Emulgierung in der hydrophoben Flüssigkeit eingekapselt.

Insbesondere werden Mikrokapseln für druckempfindliche Kopierpapiere als Aufzeichnungsmaterial jetzt in größtem Maß verwendet.

Die erfindungsgemäß erhältlichen Mikrokapseln sind sehr geeignet für druckempfindliche Papiere, denn man kann einen koagulationsfreien Kapselschlamm hoher Konzentration und niedriger Viskosität anwenden und Mikrokapselwände mit überlegener Undurchlässigkeit und zweckmäßiger Steifigkeit herstellen. Unter zweckmäßiger Steifigkeit versteht man hier die Steifigkeit, mit der man die geeignetsten Farbentwicklungseigenschaften druckempfindlicher Papiere erzielt. Dabei sind Faktoren wie Steifigkeit, Leimungsgrad sowie Oberflächenrauhigkeit des Basispapiers, die Arten der Bindemittel und der Stelze-Materialien bei der Beschichtung mit Mikrokapseln, die Stufen der Bildung der Beschichtungsschicht in der Beschichtungsmaschine usw. zu berücksichtigen.

Im allgemeinen weisen weiche Mikrokapseln eine ausreichende Widerstandsfähigkeit gegenüber geringen Druckkräften auf, so daß die Mikrokapseln selten ganz zerbrochen werden. Dagegen werden harte Mikrokapseln, wenn auch der Druck niedrig ist, bei lokaler Druckeinwirkung oberhalb eines bestimmten Drucks ganz zerbrochen, so daß die Kernsubstanz ausfließt.

Bei Anwendung der Erfindung auf druckempfindliche Papiere erfolgt die Einkapselung folgendermaßen:

**(1) Ein farbloser chromogener Farbstoff für druckempfindliche Papiere wird in der hydrophoben Flüssigkeit aufgelöst**

Geeignete hydrophobe Flüssigkeiten sind höhere Aromaten-Lösungsmittel mit niedriger Polarität und mit hohem Siedepunkt, z. B. teilweise hydriertes Terphenyl, Diarylalkan, Alkylnaphthalin, Alkylbiphenyl, Diphenyläther, chloriertes Paraffin usw.

Als Hilfslösungsmittel werden Paraffin, Alkylbenzol, Olefin usw. verwendet. Mehrwertige Alkohole mit hohem Siedepunkt, Ester mit hohem Siedepunkt, Pflanzöle, modifizierte Pflanzöle usw. werden als Lösungsmittel nur in geringer Menge für besondere Anwendungszwecke verwendet.

Farblose chromogene Farbstoffe für druckempfindliche Papiere, die in der Praxis verwendet werden, sind Triphenylmethanphthalid-Fluoran-, Phenothiazin-, Indolylphthalid-, Leucoauramin-, Spiropyran-, Triphenylmethan-, Azaphthalid, Chromenoindol-, Triazen-Farbstoffe usw. Beispiele derartiger erfindungsgemäß verwendbarer Farbstoffe sind Kristallviolettlacton (CVL) vom Triphenylmethanphthalidtyp, Benzoylleucomethylen blau (BL MB) vom Phenothiazintyp, Diphenylaminomethylanilinofluoran vom Fluorantyp.

1—8 Gew.-% mindestens eines dieser Farbstoffe werden in einem Lösungsmittel oder in einem Lösungsmittelgemisch unter Erhitzen auf 90—120°C gelöst und danach auf Raumtemperatur (etwa 25°C) abgekühlt.

**(2) Herstellung einer wäßrigen Lösung von anionischem kolloidalem Material**

Man verwendet ein anionisches wasserlösliches Copolymerisat, das aus 3 Monomeren-Acrylsäure, und Hydroxyalkylmethacrylat oder Hydroxyalkylacrylat, und Styrolsulfonsäure besteht. Oder man verwendet ein anionisches wasserlösliches Copolymerisat, das neben den obigen 3 Monomeren mindestens eine Verbindung als vierte und weitere Komponenten enthält, die aus Alkylacrylat, Methacrylsäure, Alkylmethacrylat, Acrylamid, Methacrylamid, Bernsteinsäureester des Hydroxyalkylacrylates, Bernsteinsäureester des Hydroxymethacrylates, Vinylacetat und Acrylnitril ausgewählt wird. Zur Herstellung einer wäßrigen Lösung verdünnt man dieses Copolymerisat mit Leitungswasser auf die benötigte Konzentration.

Polyäthylenmaleinsäure, Polystyrolmaleinsäure, Polyvinylalkohol, Polystyrolsulfonsäure usw., die auf dem Markt erhältlich sind und allgemein als Dispergierungsmittel verwendet werden, müssen unter Erhitzen gelöst und dann abgekühlt werden. Demgegenüber ist beim erfindungsgemäßen Verfahren die Zubereitungszeit kürzer und der Energieverbrauch geringer.

Man verwendet 2—10 Gew.-Teile des erfindungsgemäßen Copolymerisats, bezogen auf 100 Gew.-Teile Kernsubstanz. Der pH-Wert der Lösung ist je nach der Art und dem Verhältnis der Monomeren, aus denen das Copolymerisat besteht, ein wenig verschieden und liegt bei 2—4. Der pH-Wert wird in dieser Stufe nicht eingestellt.

Beispielsweise weist das Copolymerisat, das aus 69 Gew.-Teilen Acrylsäure, 15 Gew.-Teilen Hydroxyäthylmethacrylat, 10 Gew.-Teilen Styrolsulfonsäure und 6 Gew.-Teilen Bernsteinsäureester des Hydroxyäthylmethacrylates besteht, einen pH-Wert von 3,6 in 5%iger wäßriger Lösung bei 25°C auf. Dagegen weist das Copolymerisat, das aus 60 Gew.-Teilen Acrylsäure, 15 Gew.-Teilen Hydroxyäthylmethacrylat und 25 Gew.-Teilen Styrolsulfonsäure besteht, einen pH-Wert von 2,0 in 5%iger wäßriger Lösung bei 25°C auf.

**(3) Auflösen des kapselwandbildenden Materials**

Als Beispiel wird die Verwendung von Harnstoff-Formaldehydharz beschrieben, das als kapselbildendes Material am billigsten ist und strenge pH-Bedingungen benötigt. Harnstoff und eine mehrwertige phenolische Substanz, z. B. Resorcin, werden in der unter (2) beschriebenen wäßrigen Lösung aufgelöst, und der pH-Wert der Lösung wird auf 2,5—5,5 eingestellt.

**(4) Emulgierung des farblosen chromogenen Farbstoffs**

Die unter (1) beschriebene Lösung eines farblosen chromogenen Farbstoffs wird in der unter (3) beschriebenen wäßrigen Lösung dispergiert und emulgiert. Bei den Mikrokapseln für druckempfindliche Papiere spielen die Größe der emulgierten Teilchen und ihre Teilchengrößenverteilung eine große Rolle.

Um eine vorteilhafte Teilchengrößenverteilung zu erzielen, wird die Lösung vor dem Emulgierungsprozeß genügend gleichmäßig mittels eines schwachwirkenden Rührers dispergiert. Dann wird die Lösung mit der Emulgiermaschine behandelt, die eine große Rolle spielt. Geeignete Emulgiermaschinen sind z. B. Homomischapparate, Homogenisierapparate, Flußdüsenmischapparate (Flow-jet mixer), Leitungsmischapparate (In-line mill) usw. Eine vorteilhafte Emulgiermaschine ist z. B. ein Appa-

5

**0 070 528**

rat, in dem die Lösung aus Düsen gespritzt wird, oder man verwendet einen sogenannten statischen Mischapparat.

Insbesondere ist die Verwendung des statischen Mischapparats wünschenswert, der in der japanischen Offenlegungsschrift Nr. 84 740/1982 vorgeschlagen wird. Es ist wünschenswert, daß einzelne Teilchen der Mikrokapseln für die druckempfindlichen Papiere im allgemeinen eine durchschnittliche Teilchengröße von 4—5 µ haben, und daß mehr als 90% der Teilchen im Größenbereich von 1—8 µ liegen. Die Temperatur der Emulsion ist vorzugsweise Raumtemperatur, unter Berücksichtigung der Teilchengrößenverteilung, der Emulgierungsstabilität und der Behandlungsfähigkeit bei der Arbeit. Der pH-Wert der Emulsion ist bei der Verwendung des erfindungsgemäßen anionischen wasserlöslichen Copolymerisats nicht besonders beschränkt, aber dieser Wert wird unter Berücksichtigung der kapselbildenden Reaktion vorzugsweise auf 2—4 eingestellt.

Das erfindungsgemäße anionische wasserlösliche Copolymerisat ist in einem weiteren pH-Bereich stabil und dadurch gekennzeichnet, daß bei einem niedrigen pH-Wert unterhalb 4 die Lösungsstabilität, die Emulgierfähigkeit und die Stabilität der emulgierten Teilchen überlegen sind.

### (5) Die kapselwandbildende Reaktion

Nach der Bildung der emulgierten Teilchen mit einer Teilchengröße wie in Stufe (4) beschrieben, wird der pH-Wert der Lösung auf unterhalb 3,5 eingestellt.

Bei niedrigerem pH-Wert neigt die Reaktion dazu schneller zu werden und undurchlässigere Mikrokapselwände zu bilden. Aber unter Berücksichtigung der Tatsache, daß eine zu schnelle Reaktion die gleichmäßige Mikrokapselwandbildung verhindert, je nachdem, welche Materialien in die Reaktion eingesetzt wurden, ist es wünschenswert, den pH-Wert zuerst auf etwa 3,4 einzustellen und dann die Lösung unter oder nach der Zugabe von Formaldehyd zu erhitzen. Die Zugabe an Formaldehyd liegt bei 0,6—5,0 Mol, vorzugsweise bei 1,2—3,0 Mol, pro Mol Harnstoff. Da eine große Erhitzungsgeschwindigkeit vorteilhaft bei der Produktion, aber nachteilig für eine gleichmäßige Reaktion ist, muß man entsprechend dem Reaktionsinhalt und der Reaktionsmasse eine geeignete Erhitzungsgeschwindigkeit einstellen.

Die Temperatur wird auf 35—90°C, üblicherweise auf 50—75°C, eingestellt. Nach dem Erreichen der gewünschten Temperatur wird diese Temperatur eine bestimmte Zeit eingehalten, z. B. mindestens 1 Stunde lang bei 55°C.

### (6) Entfernung des restlichen Formaldehyds

Der Formaldehyd, der im Überschuß gegenüber dem Harnstoff und dem mehrwertigen Phenol verwendet wird, ist nach der kapselbildenden Reaktion noch in gewisser Menge im Kapselschlamm vorhanden.

Er wird folgendermaßen entfernt:

(A) Bei der chemischen Entfernung wird mit einer Substanz behandelt, die aktive Wasserstoffatome enthält, wie Ammoniak, Harnstoff, Sulfit, Hydrosulfit, Äthylenharnstoff, Hydroxylaminsalz und Methylacetacetat, die einzeln oder im Gemisch verwendet werden, und anschließend werden verschiedene Karbonate angewendet.

(B) Als Physikalische Verfahren seien z. B. die Wasserdampfdestillation oder die Ultrafiltration erwähnt.

Jedes Verfahren kann angewandt werden, aber ein Verfahren, bei dem der pH-Wert mit einer 28%igen wäßrigen Ammoniumhydroxydlösung auf 7,5 eingestellt wird, ist am einfachsten. Nach der Entfernung des restlichen Formaldehyds sind alle Prozesse beendet.

Anhand der nachfolgenden Beispiele wird die Erfindung näher erläutert, ohne sie damit einzuschränken. Die Teile in den Beispielen sind Gewichtsteile.

### Beispiel 1

Ein anionisches wasserlösliches Copolymerisat, das 20,0% nichtflüchtige Komponente enthält und eine Viskosität von 2500 cps (bei 25°C gemessen mit dem Brookfield-Viskosimeter hat wurde aus 70 Teilen Acrylsäure, 15 Teilen Styrolsulfonsäure und 15 Teilen Hydroxyäthylmethacrylat hergestellt. 115 Teile entsalztes Wasser wurden zu 30 Teilen des anionischen wasserlöslichen Copolymerisats unter Rühren gegeben und verdünnt.

10 Teile Harnstoff und 1,4 Teile Resorcin wurden zu dieser Lösung gegeben und unter Dispergierung gelöst, wobei man eine gleichmäßig gemischte wäßrige Lösung nur unter langsamen Umrühren ohne Erhitzen erhielt. Eine 10%ige wäßrige Natriumhydroxydlösung wurde sorgfältig in die wäßrige Lösung

6

(pH-Wert von 2,6) getropft, um den pH-Wert auf 3,4 einzustellen. Auf diese Weise wurde eine copolymerisathaltige Lösung erhalten.

Andererseits wurden ein Lösungsmittel mit hohem Siedepunkt (Hisol SAS, von Nisseki Kagaku Co. hergestellt), das Phenylxylyläthan als Hauptbestandteil enthält, und ein anderes Lösungsmittel mit hohem Siedepunkt (KMC-113, von Kureha Kagaku Co. hergestellt), das Diisopropylnaphthalin als Hauptbestandteil enthält, im Gewichtsverhältnis von 1 : 1 gemischt.

5,4 Teile Kristallviolettlacton und 1,3 Teile Benzoylleucomethylenblau wurden zu dem Lösungsmittelgemisch gegeben und unter Erhitzen auf 90°C sowie unter Umrühren aufgelöst. Die erhaltene Lösung wurde dann auf Raumtemperatur abgekühlt, zu der copolymerisathaltigen Lösung unter Berücksichtigung der Phaseumwandlung gegeben und 2,0 Minuten lang unter 9000 U/m mit einem Homo-Mischapparat (von Tokushu Kika Co. hergestellt) behandelt.

Die erhaltenen Mikrokapseln haben eine Durchschnittsteilchengröße von 4,9 µ. Anschließend wurden 26 Teile einer 37%igen wäßrigen Formaldehydlösung hinzugefügt, auf 55°C erhitzt und 2 Stunden lang bei 55°C gehalten, um die kapselwandbildende Reaktion fortzusetzen. Eine geringe Menge vom Kapselschlamm wurde zu einer wäßrigen Resorcinlösung gegeben und geschüttelt, um die Bildung der Kapselwand zu prüfen. Es wurde keine Farbänderung festgestellt. (Bei ungenügender Kapselwand-Bildung entsteht eine Blaufärbung), das bedeutet, daß eine undurchlässige Kapselwand gebildet wurde. Zur Beseitigung des restlichen Formaldehyds wurde der Kapselschlamm auf 40°C abgekühlt und dann mit einer 28%igen wäßrigen Ammoniaklösung bis zu pH-7,5 versetzt. Man erhält so einen für druckempfindliche Papiere geeigneten Kapselschlamm.

### Beispiele 2—9

Weitere Kapselschlämme wurden, auf gleiche Weise wie im Beispiel 1, unter Verwendung von 8 anionischen wasserlöslichen Copolymerisaten aus Acrylsäure, Styrolsulfonsäure und Hydroxyäthylmethacrylat in verschiedenen Gewichtsverhältnissen hergestellt.

### Beispiele 10—12

3 anionische wasserlösliche Copolymerisate aus Acrylsäure, Styrolsulfonsäure und Hydroxyäthylmethacrylat wurden hergestellt, wobei Acrylsäure und Styrolsulfonsäure in verschiedenen Mengenverhältnissen verwendet wurden. Die Kapselschlämme wurden in gleicher Weise wie im Beispiel 1 unter Verwendung der erhaltenen Copolymerisate hergestellt.

### Beispiele 13—17

Es wurden anionische wasserlösliche Copolymerisate, die aus 70 Teilen Acrylsäure, 15 Teilen Styrolsulfonsäure und 15 Teilen jeweils von Hydroxymethylmethacrylat, Hydroxytertiärbutylmethacrylat und Äthylhexylmethacrylat bestehen, hergestellt. Die Kapselschlämme wurden in gleicher Weise wie im Beispiel 1 unter Verwendung der erhaltenen Copolymerisate hergestellt. Die Prüfungsergebnisse mit Hydroxymethacrylaten sind in Tabelle 1 gezeigt. Etwa gleiche Ergebnisse wurden bei der Verwendung von Hydroxyalkylacrylaten erhalten.

### Beispiele 18—21

Die Kapselschlämme wurden in gleicher Weise wie im Beispiel 1 unter Verwendung anionischer wasserlöslicher Copolymerisaten hergestellt, die aus 70 Teilen Acrylsäure, 15 Teilen Styrolsulfonsäure, 10 Teilen Hydroxyäthylmethacrylat und 5 Teilen einer vierten Komponente bestehen, die aus Methylacrylat, Äthylacrylat, Butylacrylat und Bernsteinsäureester des Hydroxymethacrylats ausgewählt wird.

### Beispiele 22—24

Die Kapselschlämme wurden in gleicher Weise wie im Beispiel 1 unter Verwendung von 70 Teilen Acrylsäure, 10 Teilen Styrolsulfonsäure, 10 Teilen Hydroxyäthylmethacrylat, 5 Teilen einer vierten Komponente, die aus Methylmethacrylat besteht, und 5 Teilen einer fünften Komponente, die aus Vinylacetat, Acrylamid oder Acrylnitril besteht, hergestellt.

## Beispiel 25

Ein Kapselschlamm wurde in gleicher Weise wie im Beispiel 22 unter Verwendung von Vinylacetat als fünfte Komponente hergestellt, wobei ein pH-Wert von 3,7, anstatt eines pH-Werts von 3,4 im Beispiel 22, vor der Emulgierung eingestellt wurde.

## Beispiel 26

30 Teile Harnstoff wurden in entsalztem Wasser aufgelöst, um 300 Teile wäßrige Lösung herzustellen. Dazu wurden 90 Teile einer 40%igen wäßrigen Glyoxallösung gegeben. Diese Lösung wurde auf einen pH-Wert von 8 eingestellt und 5 Stunden lang bei 80—90°C umgesetzt, wobei man eine wäßrige Lösung von Harnstoff-Glyoxalvorkondensat erhält.

Andererseits wurde ein anionisches wasserlösliches Copolymerisat mit 20,5% nichtflüchtiger Komponenten und mit einer Viskosität von 1800 cps (25°C, gemessen im Brookfield Viskosimeter), das aus 70 Teilen Acrylsäure, 13 Teilen Styrolsulfonsäure, 10 Teilen Hydroxyäthylmethacrylat und 7 Teilen Äthylmethacrylat besteht, hergestellt. 30 Teile Copolymerisat wurden unter Umrühren in 130 Teile der obigen wäßrigen Lösung gelöst. In diese Lösung wurden 1,4 Teile Resorcin dispergiert und aufgelöst. Dazu gab man unter langsamen Umrühren 150 Teile der hydrophoben Lösung, die den gleichen Farbstoffvorläufer wie im Beispiel 1 enthält, dann wurde 2 Minuten lang bei 9000 U/min mit einem Homo-Mischapparat emulgiert. Man erhielt emulgierte Teilchen mit einer Durchschnittsgröße von 3,5 μ und mit einer überlegenen Verteilung.

Hierzu wurden 8 Teile einer 37%igen wäßrigen Formaldehydlösung gegeben, und die erhaltene Lösung wurde mit Ameisensäure auf einen pH-Wert von 3,8 eingestellt und 2 Stunden lang bei 60 C umgesetzt. Schließlich wurde der pH-Wert der Lösung mit einer 28%igen wäßrigen Ammoniaklösung auf 7,5 eingestellt, um den Einkapselungsprozeß zu vollenden.

## Beispiel 27

30 Teile des anionischen wasserlöslichen Copolymerisats, das aus 70 Teilen Acrylsäure, 13 Teilen Styrolsulfonsäure, 10 Teilen Hydroxyäthylmethacrylat und 7 Teilen Vinylacetat besteht, wurden in 115 Teile entsalztem Wasser aufgelöst und verdünnt. Dazu wurden 160 Teile eines hydrophoben Materials, das durch Auflösung von 15 Teilen Diäthylaminomethylanilinofluoran und 3 Teilen Kristallviolettlacton in 300 Teilen Phenylxylyläthan bei 115°C hergestellt geworden war, gegeben und dispergiert und 2 Minuten lang mit einem Homo-Mischapparat bei 9000 Umrühren/Min. emulgiert. Man erhielt emulgierte Teilchen mit einer Durchschnittsgröße von 3,3 μ. Darin wurden 30 Teile 80%iges methyliertes Methylolmelamin (Rezmine 714, hergestellt von Monsanto Co.) gelöst. Dann wurde die erhaltene Lösung mit einer 10%igen wäßrigen Natriumhydroxydlösung auf einen pH-Wert von 4,5 eingestellt, erhitzt und 2 Stunden lang bei 50°C umgesetzt. Die Lösung wurde mit einer 28%igen wäßrigen Ammoniaklösung auf einen pH-Wert von 7,5 eingestellt, um den Einkapselungsprozeß zu vollenden.

## Vergleichsbeispiele 1—4

Kapselschlämme wurden in gleicher Weise wie im Beispiel 1 unter Verwendung von anionischen wasserlöslichen Copolymerisaten hergestellt, die aus zwei Komponenten bestehen, die aus Acrylsäure, Styrolsulfonsäure und Hydroxyäthylmethacrylat ausgewählt werden.

## Vergleichsbeispiele 5—6

Kapselschlämme wurden in gleicher Weise wie im Beispiel 1 hergestellt, wobei aber Polyacrylsäure oder Äthylen-Maleinsäureanhydridcopolymerisat anstelle des anionischen wasserlöslichen Copolymerisats des Beispiels 1 einzeln verwendet wurden.

## Vergleichsbeispiel 7

Zum Vergleich mit dem Beispiel 25 wurde ein Kapselschlamm in gleicher Weise wie im Vergleichsbeispiel 6 unter Verwendung des Äthylen-Maleinsäureanhydridcopolymerisats hergestellt, wobei jedoch vor der Emulgierung ein pH-Wert von 3,7 eingestellt wurde. Die in den Beispielen und in den Vergleichsbeispielen erhaltenen Kapselschlämme wurden in bezug auf die Viskosität, die Emulgierbarkeit (Durchschnittsteilchengröße), die Emulsionsstabilität (Teilchenverteilungsweite), die Kapselwandweichheit und -undurchlässigkeit gemessen, und die Prüfungsergebnisse wurden in Tabellen 1—3 angegeben.

### (1) Viskosität

Die Viskosität eines Kapselschlamms wurde bei 25° C mit einem Brookfieldviskosimeter gemessen.

### (2) Emulgierbarkeit

Die Teilchengröße eines Kapselschlamms wurde mit einem Gerät zur Messung der Teilchengröße (Coulter Counter Modell TA-2, hergestellt von Coulter Electric Co., in USA) bestimmt.

Die Emulgierbarkeit wurde durch die Durchschnittsteilchengröße des Kapselschlamms ausgedrückt, wobei die Teilchengröße bei 50% Volumen bestimmt wurde. Je geringer die Durchschnittsteilchengröße ist, um so größer ist die Emulgierbarkeit.

### (3) Emulsionsstabilität (Teilchenverteilungsbreite)

Die Teilchenverteilungsbreite ist der Unterschied zwischen der Teilchengröße bei einem Volumen von 25% und derjenigen bei einem Volumen von 75%. Die Emulsionsstabilität ist um so höher, je geringer die Teilchenverteilungsbreite ist.

### (4) Kapselwandweichheit

180 Teile Kapselschlamm, 35 Teile Weizenstärke, 85 Teile einer 8%igen wäßrigen Maisstärkelösung und 340 Teile Wasser wurden vermischt und dispergiert, um die Beschichtungsfarbe herzustellen. Die Beschichtungsfarbe wurde mittels eines Siebstabs in einer Beschichtungsmenge von 4,5 g/m$^2$ auf ein Basispapier von 40 g/m$^2$ aufgetragen und getrocknet, um ein oberes Papier herzustellen.

Das erhaltene obere Papier und ein unteres Papier (W-50BR, ein Produkt von JUJO PAPER CO., LTD.) wurden aufeinander gelegt und mit einem statischen Druck von 20 kg/cm$^2$ verpreßt.

Der Reflexionsgrad der Farbentwicklungsfläche des unteren Papiers wurde 1 Stunde nach der Druckanwendung unter Verwendung des Hunter-Reflektometers gemessen. Der Unterschied zwischen dem oben erhaltenen Reflexionsgrad und dem Reflexionsgrad des unteren Papiers vor dem Test wurde bestimmt. Man stellt einen nur geringen Unterschied fest, was auf eine überlegene Kapselwandweichheit hinweist. Für die praktische Anwendung ist es wünschenswert, daß dieser Unterschied kleiner als 10 Punkte ist.

### (5) Kapselwandundurchlässigkeit

Das obere Papier wurde in gleicher Weise wie für die Prüfung der Kapselwandweichheit hergestellt und 24 Stunden lang im Ofen bei 105° C gelagert. Das obere Papier und das untere Papier (W-50BR, ein Produkt von JUJO PAPER CO., LTD.) wurden aufeinander gelegt und unter Verwendung eines Kalanders mit einem Liniendruck von 15 kg/cm gefärbt.

Der Reflexionsgrad der Farbentwicklungsfläche wurde 1 Stunde nach der Kalanderbehandlung gemessen, und der Unterschied zwischen dem obigem Reflexionsgrad und dem Reflexionsgrad des oberen Papiers ohne Ofenbehandlung, das mittels des Kalanders unter gleicher Bedingung behandelt worden war, wurde bestimmt. Man stellt nur einen kleinen Unterschied fest, was auf eine überlegene Kapselwandundurchlässigkeit und eine gute Haltbarkeit hinweist. (Die Kapselwandundurchlässigkeit wird als Grad der Qualitätsminderung beim Erhitzen angegeben.) Für die praktische Anwendung ist es wünschenswert, daß dieser Unterschied weniger als 5 Punkte beträgt. Wie aus den Tabellen 1—3 ersichtlich ist, haben die erfindungsgemäßen Kapselschlämme in den Beispielen einen Viskositätsbereich von 100—650 cps, sie sind besser in der Emulgierbarkeit, der Emulsionsstabilität, der Kapselwandweichheit und -undurchlässigkeit.

Die Kapselschlämme in den Vergleichsbeispielen haben dagegen eine höhere Viskosität, sind unterlegen in der Emulgierungsfähigkeit, koagulieren bei der Einkapselung und weisen Probleme in bezug auf die Kapselwandweichheit und -durchlässigkeit auf.

0 070 528

Tabelle 1
Prüfungsergebnisse der Beispiele

| Beispiel Nr. | Zusammensetzung des Copolymerisats (Gew.-%) | | | Viskosität des Kapselschlamms (25°C) cps | Emulgierbarkeit (Durchschnitts- teilchengröße) μ |
|---|---|---|---|---|---|
| | Acrylsäure | Styrolsulfonsäure | Hydroxyalkylmethacrylat | | |
| | | | (Hydroxyäthylmethacrylat) | | |
| 1 | 70 | 15 | 15 | 250 | 5,0 |
| 2 | 70 | 17,5 | 12,5 | 320 | 4,7 |
| 3 | 70 | 20 | 10 | 300 | 4,2 |
| | | | (Hydroxyäthylmethacrylat) | | |
| 4 | 70 | 25 | 5 | 500 | 3,8 |
| 5 | 60 | 25 | 15 | 280 | 4,0 |
| 6 | 50 | 25 | 25 | 120 | 4,1 |
| 7 | 40 | 25 | 35 | 130 | 4,2 |
| 8 | 30 | 25 | 45 | 170 | 4,1 |
| 9 | 20 | 25 | 55 | 230 | 3,9 |
| | | | (Hydroxyäthylmethacrylat) | | |
| 10 | 75 | 15 | 10 | 390 | 4,9 |
| 11 | 77,5 | 12,5 | 10 | 430 | 5,2 |
| 12 | 80 | 10 | 10 | 450 | 5,6 |
| | | | (Hydroxymethylmethacrylat) | | |
| 13 | 70 | 15 | 15 | 340 | 5,2 |
| | | | (Hydroxybutylmethacrylat) | | |
| 14 | 70 | 15 | 15 | 470 | 6,0 |
| | | | (Hydroxyisobutylmethacrylat) | | |
| 15 | 70 | 15 | 15 | 560 | 6,3 |
| | | | (Hydroxytertiärbutylmethacrylat) | | |
| 16 | 70 | 15 | 15 | 630 | 6,0 |
| | | | (Hydroxyäthylhexylmethacrylat) | | |
| 17 | 70 | 15 | 15 | 390 | 5,5 |

Tabelle 1 (Fortsetzung

| Beispiel Nr. | Emulsionsstabi-lität (Teilchen-verteilungsbreite) μ | Kapselwandweichheit (Farbentwicklung bei einem statischen Druck von 20 kg/cm²) Punkte | Kapselwandundurch-lässigkeit (Quali-tätsverschlechterung bei 24stündigem Erhitzen bei 105°C Punkte | Anmerkungen |
|---|---|---|---|---|
| 1 | 3,2 | 7,5 | 2,9 | Steigende Mengen Styrolsulfonsäure ergeben gute Emulgierbar-keit, aber eine geringere Kapselwandundurchlässigkeit. |
| 2 | 2,8 | 6,7 | 3,0 | |
| 3 | 2,5 | 6,2 | 3,4 | |
| 4 | 2,3 | 5,6 | 3,5 | Abnehmende Mengen Acrylsäure und zunehmende Mengen Hy-droxyäthylmethacrylat ergeben eine zunehmende Kapselwand-weichheit, erniedrigen sowohl die Emulsionsstabilität als auch die Kapselwandundurchlässigkeit. |
| 5 | 2,5 | 5,2 | 3,8 | |
| 6 | 2,8 | 4,7 | 4,0 | |
| 7 | 3,1 | 4,9 | 4,2 | |
| 8 | 3,5 | 4,7 | 4,5 | |
| 9 | 4,0 | 4,1 | 4,9 | |
| 10 | 3,3 | 7,3 | 2,8 | Zunehmende Mengen Acrylsäure und abnehmende Mengen Sty-rolsulfonsäure ergeben geringere Emulsionsstabilität. |
| 11 | 3,5 | 7,6 | 2,5 | |
| 12 | 3,8 | 8,0 | 2,6 | |
| 13 | 5,2 | 7,5 | 3,4 | Die Menge des Hydroxymethacrylats übt einen geringen Einfluß auf die Emulgierbarkeit und die Emulsionsstabilität aus, ergibt aber ein gutes Ergebnis bei der praktischen Verwendung. |
| 14 | 6,0 | 8,5 | 3,0 | |
| 15 | 6,3 | 8,7 | 3,2 | |
| 16 | 6,0 | 8,4 | 2,9 | |
| 17 | 5,5 | 8,4 | 2,9 | |

Tabelle 2
Prüfungsergebnisse der Beispiele

| Beispiel Nr. | Zusammensetzung des Copolymerisats (Gew.-%) | | | | Fünfte Komponente | Viskosität des Kapsel-schlamms (25°C) cps | Emulgierbarkeit (Durchschnitts-teilchengröße) μ |
|---|---|---|---|---|---|---|---|
| | Acrylsäure | Styrol-sulfonsäure | Hydroxyäthyl-methacrylat | Vierte Komponente | | | |
| 18 | 70 | 15 | 10 | (Methylacrylat) 5 | — | 350 | 4,0 |
| 19 | 70 | 15 | 10 | (Äthylacrylat) 5 | — | 380 | 4,1 |
| 20 | 70 | 15 | 10 | (Butylacrylat) 5 | — | 420 | 4,3 |
| 21 | 70 | 15 | 10 | (Bernsteinsäureester des Hydroxyäthylmethacrylat) 5 | — | 600 | 4,8 |
| 22 | 70 | 10 | 10 | (Methylmethacrylat) 5 | (Vinylacetat) 5 | 150 | 3,7 |
| 23 | 70 | 10 | 10 | 5 | (Acrylamid) 5 | 420 | 3,8 |
| 24 | 70 | 10 | 10 | 5 | (Acrylnitril) 5 | 310 | 3,9 |
| 25 | 70 | 10 | 10 | (Methylmethacrylat) 5 | (Vinylacetat) 5 | 260 | 3,8 |
| 26 | 70 | 13 | 10 | (Äthylmethacrylat) 7 | — | 430 | 3,7 |
| 27 | 70 | 13 | 10 | (Vinylacetat) 7 | — | 640 | 3,5 |

Tabelle 2 (Fortsetzung)

| Beispiel Nr. | Emulsionsstabilität (Teilchenverteilungsbreite $\mu$ | Kapselwandweichheit (Farbentwicklung unter statischem Druck von 20 kg/cm² ) Punkte | Kapselwandundurchlässigkeit (Qualitätsverschlechterung bei 24stündigem Erhitzen bei 105°C Punkte | Anmerkungen |
|---|---|---|---|---|
| 18 | 2,3 | 4,2 | 2,3 | Die Zugabe der vierten Komponente ergibt zunehmende Emulsionsstabilität und verbessert die Kapselwandweichheit und -un- |
| 19 | 2,2 | 4,3 | 2,5 | durchlässigkeit. |
| 20 | 2,5 | 4,5 | 2,0 | |
| 21 | 3,0 | 5,0 | 2,1 | |
| 22 | 2,0 | 3,8 | 1,4 | Die Zugabe der fünften Komponente ergibt eine weitere Verbesserung der Kapselwandundurchlässigkeit |
| 23 | 2,1 | 4,0 | 2,0 | |
| 24 | 2,3 | 4,2 | 1,9 | |
| 25 | 1,9 | 5,6 | 2,7 | Wenn der pH-Wert des Emulgierungsmittels auf 3,7 eingestellt wird, erniedrigt sich Kapselwandundurchlässigkeit, aber es gibt keine praktischen Probleme. |
| 26 | 2,8 | 7,4 | 4,8 | Harnstoff-Glyoxalvorkondensat oder Melamin-Formaldehydvorkondensat als Kapselwandmaterial ergibt überlegene Mikrokapseln. |
| 27 | 3,5 | 4,9 | 3,1 | |

Tabelle 3
Prüfungsergebnisse der Vergleichsbeispiele

| Vergleichsbeispiel Nr. | Zusammensetzung des Copolymerisats (Gew.-%) | | Hydroxyalkylmethacrylat | Viskosität des Kapsel-schlamms (25°C) cps | Emulgierbarkeit (Durchschnitts-teilchengröße) |
|---|---|---|---|---|---|
| | Acrylsäure | Styrolsulfonsäure | | | |
| 1 | 80 | 20 | — | 1230 | 4,7 |
| 2 | 80 | — | 20 | 1170 | 6,7 |
| 3 | — | 80 | 20 | — | — |
| 4 | — | 20 | 80 | — | — |
| 5 | (Polyacrylsäure 100) | | | 3000 | 5,4 |
| 6 | (Äthylen-Maleinsäureanhydridcopolymerisat 100) | | | 1000 | 5,2 |
| 7 | (Äthylen-Maleinsäureanhydridcopolymerisat 100) | | | 1200 | 5,2 |

Tabelle 3 (Fortsetzung)

| Beispiel Nr. | Emulsionsstabilität (Teilchenverteilungsbreite) $\mu$ | Kapselwandweichheit (Farbentwicklung unter statischem Druck von 20 kg/cm$^2$) Punkte | Kapselwandundurchlässigkeit (Qualitätsverschlechterung bei 24stündigem Erhitzen bei 105° C Punkte | Anmerkungen |
|---|---|---|---|---|
| 1 | 4,9 | 10,2 | 4,8 | Die Viskosität der Kapselschlamme ist hoch, die Kapselwandweichheit ist ungenügend, die Emulsionsstabilität ist unterlegen |
| 2 | 7,3 | 17,0 | 6,2 | und Koagulation tritt auf, so daß eine Einkapselung unmöglich ist. |
| 3 | — | — | — | |
| 4 | — | — | —· | |
| 5 | 5,6 | 13,2 | 3,2 | Die Viskosität der Kapselschlamme ist hoch, die Kapselwandweichheit oder -undurchlässigkeit ist ungenügend. |
| 6 | 3,2 | 8,4 | 4,5 | Beim Äthylen-Maleinsäureanhydridcopolymerisat verschlechtert sich plötzlich die Mikrokapselqualität, wenn der pH-Wert bei der |
| 7 | 3,4 | 9,5 | 7,2 | Emulgierung auf 3,7 eingestellt wird; eine Einkapselung ist nicht möglich. |

0 070 528

**Patentansprüche**

1. Mikrokapseln, dadurch erhältlich, daß man als Kapselwandmaterial ein Aminoharz in einem System verwendet, bei dem eine hydrophobe Kernsubstanz in einer sauren wäßrigen Lösung, die ein anionisches kolloidales Material enthält, dispergiert oder emulgiert wird, wobei man als anionisches kolloidales Material ein anionisches wasserlösliches Copolymerisat verwendet, das aus mindestens drei Monomeren besteht, nämlich Acrylsäure, Hydroxyalkylacrylat oder Hydroxyalkylmethacrylat, und Styrolsulfonsäure.

2. Mikrokapseln nach Anspruch 1, dadurch gekennzeichnet, daß das Aminoharz ein Harnstoff-Aldehydpolykondensat, ein Melamin-Aldehydpolykondensat oder ein Harnstoff-Formaldehydpolykondensat ist.

3. Mikrokapseln nach Anspruch 1, dadurch gekennzeichnet, daß das anionische wasserlösliche Copolymerisat zusätzlich mindestens eine einpolymerisierte Verbindung aus der Gruppe Alkylacrylat, Methacrylsäure, Alkylmethacrylat, Acrylamid, Methacrylamid, Bernsteinsäureester des Hydroxyalkylacrylats, Bernsteinsäureester des Hydroxyalkylmethacrylates, Vinylacetat und Acrylnitril, als vierte und weitere Komponente, neben den 3 Monomeren Acrylsäure, Hydroxyalkylacrylat oder Hydroxyalkylmethacrylat und Styrolsulfonsäure, enthält.

4. Mikrokapseln nach einem der Ansprüche 1 und 3, dadurch gekennzeichnet, daß das anionische wasserlösliche Copolymerisat 10—95 Gew.-% Acrylsäure, 2—50 Gew.-% Styrolsulfonsäure, 2—30 Gew.-% Hydroxyalkylacrylat oder Hydroxyalkylmethacrylat, und 0—20 Gew.-% der vierten und weiteren Komponente enthält.

5. Mikrokapseln nach einem der Ansprüche 1 und 3, dadurch gekennzeichnet, daß das anionische wasserlösliche Copolymerisat mindestens 50 Gew.-% Acrylsäure enthält.

6. Mikrokapseln nach einem der Ansprüche 1 und 3, dadurch gekennzeichnet, daß das anionische wasserlösliche Copolymerisat 50—80 Gew.-% Acrylsäure, 5—30 Gew.-% Styrolsulfonsäure, 5—20 Gew.-% Hydroxyalkylacrylat oder Hydroxyalkylmethacrylat, und 1—15 Gew.-% der vierten und weiteren Komponente enthält.

7. Mikrokapseln nach einem der Ansprüche 1 und 3—6, dadurch gekennzeichnet, daß die Hydroxyalkylgruppe des Hydroxyalkylmethacrylats und des Hydroxyalkylacrylats 1—4 Kohlenstoffatome besitzt.

8. Mikrokapseln nach einem der Ansprüche 1 und 3—6, dadurch gekennzeichnet, daß man 100 Gew.-Teile des anionischen wasserlöslichen Copolymerisats, bezogen auf 100 Gew.-Teile des kapselbildenden Materials, verwendet.

9. Verfahren zur Herstellung der Mikrokapseln der Ansprüche 1 bis 8, wobei man ein Aminoharz als Kapselwandmaterial in einem System verwendet, bei dem eine hydrophobe Kernsubstanz in einer sauren wäßrigen Lösung, die ein anionisches kolloidales Material enthält, dispergiert oder emulgiert wird, dadurch gekennzeichnet, daß man als anionisches kolloidales Material ein anionisches wasserlösliches Copolymerisat verwendet, das aus mindestens drei Monomeren besteht, nämlich Acrylsäure, Hydroxyalkylacrylat oder Hydroxyalkylmethacrylat, und Styrolsulfonsäure.

10. Verfahren nach Anspruch 9, dadurch gekennzeichnet, daß man als Aminoharz ein Harnstoff-Aldehydpolykondensat, ein Melamin-Aldehydpolykondensat oder ein Harnstoff-Formaldehydpolykondensat verwendet.

11. Verfahren nach Anspruch 9, dadurch gekennzeichnet, daß das anionische wasserlösliche Copolymerisat zusätzlich mindestens eine einpolymerisierte Verbindung aus der Gruppe Alkylacrylat, Methacrylsäure, Alkylmethacrylat, Acrylamid, Methacrylamid, Bernsteinsäureester des Hydroxyalkylacrylats, Bernsteinsäureester des Hydroxyalkylmethacrylates, Vinylacetat und Acrylnitril als vierte und weitere Komponente neben den 3 Monomeren Acrylsäure, Hydroxyalkylacrylat oder Hydroxyalkylmethacrylat und Styrolsulfonsäure, enthält.

12. Verfahren nach einem der Ansprüche 9 und 11, dadurch gekennzeichnet, daß das anionische wasserlösliche Copolymerisat 10—95 Gew.-% Acrylsäure, 2—50 Gew.-% Styrolsulfonsäure, 2—30 Gew.-% Hydroxyalkylacrylat oder Hydroxyalkylmethacrylat, und 0—20 Gew.-% der vierten und weiteren Komponente enthält.

13. Verfahren nach einem der Ansprüche 9 und 11, dadurch gekennzeichnet, daß das anionische wasserlösliche Copolymerisat mindestens 50 Gew.-% Acrylsäure enthält.

14. Verfahren nach einem der Ansprüche 9 und 11, dadurch gekennzeichnet, daß das anionische wasserlösliche Copolymerisat 50—80 Gew.-% Acrylsäure, 5—30 Gew.-% Styrolsulfonsäure, 5—20 Gew.-% Hydroxyalkylacrylat oder Hydroxyalkylmethacrylat, und 1—15 Gew.-% der vierten und weiteren Komponente enthält.

15. Verfahren nach einem der Ansprüche 9 und 11—14, dadurch gekennzeichnet, daß die Hydroxyalkylgruppe des Hydroxyalkylmethacrylats und des Hydroxyalkylacrylats 1—4 Kohlenstoffatome besitzt.

16. Verfahren nach einem der Ansprüche 9 und 11—14, dadurch gekennzeichnet, daß man 100 Gew.-Teile des anionischen wasserlöslichen Copolymerisats, bezogen auf 100 Gew.-Teile des kapselbildenden Materials, verwendet.

17. Verfahren nach einem der Ansprüche 9, 11—14 und 16, dadurch gekennzeichnet, daß das anionische wasserlösliche Copolymerisat mit anderen anionischen wasserlöslichen hochmolekularen Materialien verwendet wird.

18. Verwendung der Mikrokapseln der Ansprüche 1 bis 8 in druckempfindlichen Papieren und bei deren Herstellung.

**Claims**

1. Microcapsules obtainable thereby that one uses as wand material for the capsules an amino resin in a system, in which a hydrophobic core substance is dispersed or emulsified in an acidic aqueous solution containing an anionic colloidal material, whereby one uses as anionic colloidal material an anionic water-soluble copolymer which consists out of at least three monomers, i. e. acrylic acid, hydroxyalkyl acrylate or hydroxyalkyl methacrylate, and styrenesulfonic acid.

2. Microcapsules according to claim 1, characterized in that the amino resin is an urea-aldehyde polycondensate, a melamine-aldehyde polycondensate or an urea-formaldehyde polycondensate.

3. Microcapsules according to claim 1, characterized in that the anionic water-soluble copolymer contains in addition at least one compound which is incorporated by polymerization and which is selected from the group consisting of alkyl acrylate, methacrylic acid, alkyl methacrylate, acrylamide, methacrylamide, succinic ester of hydroxyalkyl acrylate, succinic ester of hydroxyalkyl methacrylate, vinyl acetate and acrylonitrile as fourth and further component, besides the three monomers acrylic acid, hydroxyalkyl acrylate or hydroxyalkyl methacrylate and styrenesulfonic acid.

4. Microcapsules according to one of the claims 1 and 3, characterized in that the anionic water soluble copolymer contains 10—95% by weight acrylic acid, 2—50% by weight styrenesulfonic acid, 2—30% by weight hydroxyalkyl acrylate or hydroxyalkyl methacrylate, and 0—20% by weight of the fourth or further component.

5. Microcapsules according to one of the claims 1 and 3, characterized in that the anionic water soluble copolymer contains at least 50% by weight acrylic acid.

6. Microcapsules according to one of the claims 1 and 3, characterized in that the anionic water soluble copolymer contains 50—80% by weight acrylic acid, 5—30% by weight styrenesulfonic acid, 5—20% by weight hydroxyalkyl acrylate or hydroxyalkyl methacrylate, and 1—15% by weight of the fourth and further component.

7. Microcapsules according to claim 1 and 3—6, characterized in that the hydroxyalkyl group of the hydroxyalkyl methacrylate and the hydroxyalkyl acrylate has 1—4 carbon atoms.

8. Microcapsules according to one of the claims 1 and 3—6, characterized in that one uses 100 parts by weight of the anionic water soluble copolymer, based on 100 parts by weight fo the material forming the capsules.

9. Process for producing the microcapsules of claims 1—8 whereby one uses an amino resin as wand material of the capsules in a system, in which a hydrophobic core substance is dispersed or emulsified in an acidic aqueous solution containing an anionic colloidal material, characterized in that one uses as anionic colloidal material an anionic water soluble copolymer which consists out of at least three monomers, i. e. acrylic acid, hydroxyalkyl acrylate or hydroxyalkyl methacrylate, and styrenesulfonic acid.

10. Process according to claim 9, characterized in that one uses as amino resin an urea-aldehyde polycondensate, a melamine-aldehyde polycondensate or an ureaformaldehyde polycondensate.

11. Process according to claim 9, characterized in that the anionic water soluble copolymer contains in addition at least one compound which is incorporated by polymerization and which is selected from the group consisting of alkyl acrylate, methacrylic acid, alkyl methacrylate, acrylamide, methacrylamide, succinic ester of hydroxyalkyl acrylate, succinic ester of hydroxyalkyl methacrylate, vinyl acetate and acrylonitrile as fourth and further component, besides the three monomers acrylic acid, hydroxyalkyl acrylate or hydroxyalkyl methacrylate and styrenesulfonic acid.

12. Process according to one of the claims 9 and 11, characterized in that the anionic water soluble copolymer contains 10—95% by weight acrylic acid, 2—50% by weight styrenesulfonic acid, 2—30% by weight hydroxyalkyl acrylate or hydroxyalkyl methacrylate; and 0—20% by weight of the fourth and further component.

13. Process according to one of the claims 9 and 11, characterized in that the anionic water soluble copolymer contains at least 50% by weight acrylic acid.

14. Process according to one of the claims 9 and 11, characterized in that the anionic water-soluble copolymer contains 50—80% by weight acrylic acid, 5—30% by weight styrene sulfonic acid, 5—20% by weight hydroxyalkyl acrylate or hydroxyalkyl methacrylate, and 1—15% by weight of the fourth and further component.

15. Process according to one of the claims 9 and 11—14, characterized in that the hydroxyalkyl group of the hydroxyalkyl methacrylate and the hydroxyalkyl acrylate has 1—4 carbon atoms.

16. Process according to one of the claims 9 and 11—14, characterized in that one uses 100 parts by weight of the anionic water-soluble copolymer, based on 100 parts by weight of the material forming the capsules.

17. Process according to one of the claims 9, 11—14 and 16, characterized in that the anionic water-soluble copolymer is used together with further anionic water-soluble materials of high molecular weight.

18. Use of the microcapsules according to claims 1—8 in pressure sensitive papers and for their production.

**Revendications**

1. Microcapsules obtenues en utilisant comme substance formant la paroi de capsule, une résine aminée dans un système dans lequel une substance hydrophobe formant le noyau de capsule est dispersée ou émulsifiée dans une solution aqueuse acide, qui contient une substance colloïdale anionique, où l'on utilise, comme substance colloïdale anionique, un copolymère anionique soluble dans l'eau, qui est constitué d'au moins trois monomères, à savoir l'acide acrylique, un acrylate d'hydroxyalkyle ou un méthacrylate d'hydroxyalkyle, et l'acide styrène-sulfonique.

2. Microcapsules selon la revendication 1, caractérisées par le fait que la résine aminée est un polycondensat d'urée-aldéhyde, un polycondensat de mélamine-aldéhyde ou un polycondensat d'urée-formaldéhyde.

3. Microcapsules selon la revendication 1, caractérisées par le fait que le copolymère anionique soluble dans l'eau contient, de façon supplémentaire, au moins un composé incorporé par polymérisation et pris dans le groupe constitué par un acrylate d'alkyle, l'acide méthacrylique, un méthacrylate d'alkyle, l'acrylamide, le méthacrylamide, l'ester succinique d'un acrylate d'hydroxyalkyle, l'ester succinique d'un méthacrylate d'hydroxyalkyle, l'acétate de vinyle et l'acrylonitrile, en tant que quatrième et autre composant, en dehors des trois monomères : acide acrylique, acrylate d'hydroxyalkyle ou méthacrylate d'hydroxyalkyle et acide styrènesulfonique.

4. Microcapsules selon l'une des revendication 1 et 3, caractérisées par le fait que le copolymère anionique soluble dans l'eau contient 10% à 95% en poids d'acide acrylique, 2% à 50% en poids d'acide styrène-sulfonique, 2% à 30% en poids d'acrylate d'hydroxyalkyle ou de méthacrylate d'hydroxyalkyle et 0% à 20% en poids du quatrième et autre composant.

5. Microcapsules selon l'une des revendications 1 et 3, caractérisées par le fait que le copolymère anioniqaue soluble dans l'eau contient au moins 50% en poids d'acide acrylique.

6. Microcapsules selon l'une des revendications 1 et 3, caractérisées par le fait que le copolymère anionique soluble dans l'eau contient 50% à 80% en poids d'acide acrylique, 5% à 30% en poids d'acide styrènesulfonique, 5% à 20% en poids d'acrylate d'hydroxyalkyle ou de méthacrylate d'hydroxyalkyle, et 1% à 15% en poids du quatrième et autre composant.

7. Microcapsules selon l'une des revendications 1 et 3 à 6, caractérisées par le fait que le groupe hydroxyalkyle du méthacrylate d'hydroxyalkyle et de l'acrylate d'hydrdoxyalkyle possède 1 à 4 atomes de carbone.

8. Microcapsules selon l'une des revendications 1 et 3 à 6, caractérisées par le fait que l'on utilise 100 parties en poids du copolymère anionique soluble dans l'eau, par rapport à 100 parties en poids de la substance formant les capsules.

9. Procédé de préparation des microcapsules selon les revendications 1 à 8, dans lequel on utilise une résine aminée, comme substance formant la paroi de capsule, dans un système dans lequel une substance hydrophobe formant le noyau de capsule est dispersée ou émulsifiée dans une solution aqueuse acide, qui contient une substance colloïdale anionique, caractérisé par le fait que l'on utilise, comme substance colloïdale anionique, un copolymère anionique soluble dans l'eau qui est constitué d'au moins trois monomères, à savoir l'acide acrylique, un acrylate d'hydroxyalkyle ou méthacrylate d'hydroxyalkyle, et l'acide styrènesulfonique.

10. Procédé selon la revendication 9, caractérisées par le fait que l'on utilise, comme résine aminée, un polycondensat d'urée-aldéhyde, un polycondensat de mélamine-formaldéhyde ou un polycondensat d'urée-formaldéhyde.

11. Procédé selon la revendication 9, caractérisées par le fait que le copolymère anionique soluble dans l'eau contient, de façon supplementaire, au moins un composé incorporé par polymérisation et pris dans le groupe constitué par un acrylate d'alkyle, l'acide méthacrylique, un méthacrylate d'alkyle, l'acrylamide, le méthacrylamide, l'ester succinique d'un acrylate d'hydroxyalkyle, l'ester succinique d'un méthacrylate d'hydroxyalkyle, l'acétate de vinyle et l'acrylonitrile, en tant que quatrième et autre composant, en dehors des trois monomères : acide acrylique, acrylate d'hydroxyalkyle ou méthacrylate d'hydroxyalkyle et acide styrènesulfonique.

12. Procédé selon l'une des revendications 9 et 11, caractérisées par le fait que le copolymère anionique soluble dans l'eau contient 10% à 95% en poids d'acide acrylique, 2% à 50% en poids d'acide styrènesulfonique, 2% à 30% en poids d'acrylate d'hydroxyalkyle ou de méthacrylate d'hydroxyalkyle, et 0% à 20% en poids du quatrième et autre composant.

13. Procédé selon l'une des revendications 9 et 11, caractérisées par le fait que le copolymère anionique soluble dans l'eau contient au moins 50% en poids d'acide acrylique.

14. Procédé selon l'une des revendications 9 et 11, caractérisées par le fait que le copolymère anionique soluble dans l'eau contient 50% à 80% en poids d'acide acrylique, 5% à 30% en poids d'acide styrènesulfonique, 5% à 20% en poids d'acrylate d'hydroxyalkyle ou de méthacrylate d'hydroxyalkyle, et 1% à 15% en poids du quatrième et autre composant.

15. Procédé selon l'une des revendications 9 et 11 à 14, caractérisées par le fait que le groupe hydroxyalkyle de l'acrylate d'hydroxyalkyle et du méthacrylate d'hydroxyalkyle possède 1 à 4 atomes de carbone.

16. Procédé selon l'une des revendications 9 et 11 à 14, caractérisées par le fait que l'on utilise 100 parties en poids du copolymère anionique soluble dans l'eau, par rapport à 100 parties en poids de la substance formant les capsules.

17. Procédé selon l'une des revendications 9, 11 à 14 et 16, caractérisées par le fait que le copolymère anionique soluble dans l'eau est utilisé avec d'autres substances anioniques solubles dans l'eau à poids moléculaire élevé.

18. Application des microcapsules selon l'une des revendications 1 à 8 dans les papiers sensibles à la pression et pour leur fabrication.